# EUROPEAN PATENT SPECIFICATION

(11) **EP 4 210 464 B1**
(45) Date of publication and mention of the grant of the patent: **07.01.2026**
(21) Application number: 21866233.6
(22) Date of filing: 11.08.2021
(51) Int. Cl.: A01D 17/00, A01D 33/00, A01D 17/10

(54) **A PULL TYPE TRACTOR DRIVEN ROOT CROP DIGGER CUM HARVESTER**
SCHLEPPERGETRIEBENER BAGGER MIT GEZOGENER WURZELFRUCHTKRÄFTER UND ERNTEMASCHINE
ARRACHEUSE RÉCOLTEUSE DE PLANTES À RACINES ENTRAÎNÉE PAR UN TRACTEUR DE TYPE À TRACTION

(30) Priority: 11.09.2020 IN 202021039312
(43) Date of publication of application: 19.07.2023
(73) Proprietor: Shaktiman Grimme Root Crop Solutions Private Limited, Gujarat 360 311 (IN)
(72) Inventor: GOHIL, Hasmukhbhai Gatorbhai, Rajkot 360 311, Gujarat 360 311 (IN); KRUTHAUP, Franz-Bernd, Rajkot Gujarat 360 311 (IN)
(74) Representative: Braunpat AG
(86) International application number: PCT/IN2021/050769
(87) International publication number: WO 2022/054074

(56) References cited:
- DE-C- 400 038
- US-A- 4 560 008
- US-A1- 2002 185 284
- US-A1- 2010 096 301
- US-A1- 2016 113 192
- US-A1- 2016 113 193
- US-A1- 2019 261 552
- US-B2- 7 165 628

## Description

### FIELD OF INVENTION

The present invention relates to an agricultural machinery technological field and more particularly it relates to a pull type tractor driven root crop digger cum harvester.

### BACKGROUND OF INVENTION

Currently various types of root crop harvesters are available in the market, including bigger self-propelled machines and smaller tractor driven machines. Countries such as India where fields are not very large and majority of tractor horse power is less than 55 Hp Tractor driven machines are popular due to low cost and simple design.

One such root crop harvester has been described in patent document US7958942B2 discloses a potato harvester has a lifting device for lifting soil ridges, wherein the lifting device has a digging device with digging shares. At least one Support element for supporting the lifting device on the ground is provided. The at least one Support element has at least two wheels that are movable along opposite sides of an intermediately positioned soil ridge, respectively. The wheels form a guide unit that supports at least one part of a weight of the at least one digging device, wherein the guide unit controls the digging shares and acts on a soil ridge to be lifted as an intake aid.

US 20190261552 A1 discloses a potato harvesting machine has a lifting device picking up a mixture of crop and admixtures. Screening belts downstream of the lifting device transport the mixture away from the lifting device and a feed belt feeds the mixture to a sorting zone. A separating device is arranged in the sorting zone above the feed belt. A sorting belt is arranged downstream of the separating device that has first and second stripper belts circulating in a stripping direction and provided with stripper elements. The stripper elements act on the crop transverse to a feed direction and supply the crop to the sorting belt. The admixtures remain on the feed belt and are discharged in a guiding direction angled to the stripping direction.

US 20160113192 A1 discloses a root crop harvesting machine has a crop lifting device that has associated therewith downstream in the conveying direction an ascending first sorting stretch with substantially unchangeable working width. The crop is conveyed across a cleaning stretch to a collecting bunker, wherein a conveying run movable along the ascending sorting stretch is guided to a top drop zone where the conveyed material is transferred onto a downstream conveying stretch. The conveying run in the area of an upper unloading end interacts with at least one deflection conveying unit receiving the conveyed crop stream. This upper deflection conveying unit is provided with at least one separating device that, in working position, is moveable into a position of lateral projecting width so as to project at least on one side past the receiving width of the machine; from this position, it is returnable into a travel position for road travel.

US 20160113193 A1 discloses a machine for harvesting root crop has a lifting device that in a position of use on a harvest field lifts several rows of the crop with admixtures from the soil transversely to the travel direction in accordance with a lifting width. From the lifting device the loosened mixture of crop and admixtures is movable opposite to the travel direction by a first longitudinal conveyor and is transferred onto a second screening belt conveyor. Between longitudinal conveyor and screening belt conveyor, a transfer zone is defined with belt overlap. The first longitudinal conveyor in the conveying direction together with the upstream lifting device forms a module that is movable in transverse direction of the machine relative to the second screening belt conveyor. This module, relative to the common transfer zone, can be moved at least section wise into a position of lateral spacing relative to the second screening belt conveyor.

However, one of the disadvantages of such arrangement is that during turns, they have to be lifted using tractor 3-point linkage, this results in tractor lifting from front. In order to overcome this problem one is forced to use higher HP heavier Tractor with ballasts in front. Else harvester needs to be smaller in size that results into limiting productivity. Further, during harvesting, separating the dirt from the root crops, such as potatoes, roots, onions, sweet potatoes, etc., which can be satisfactorily accomplished by a shaking conveyer chain of the conventional type, there is the problem of removing the vines, weeds and similar material from the root crops and also of removing rocks and clods. In some root crop growing sections, the rocks are almost as numerous as the root crops and are frequently of substantially the same size and shape. The stones must not only be separated from the root crops but should be removed without permitting the root crops to be bruised during conveying operations. This problem has been one of the major ones in the mechanical harvesting of root crops.

Therefore, a need exists for a root crop harvester that is capable to overcome aforementioned problems.

### OBJECT OF THE INVENTION

A main object of the present invention is to provide a pull type tractor driven root crop digger cum harvester that is free from the limitations associated with conventional root crop harvester.

Another object of the present invention is to provide a pull type tractor driven root crop digger cum harvester having an improved hitch system allows the articulation between tractor and harvester resulting in smaller turning radius and not causing any front lifting of tractor.

Further object of the invention is to provide a pull type tractor driven root crop digger cum harvester having an efficient conveyor system that separates most of the soil clods from the harvested root crop on front side and back side of the conveyor.

With this object in view, and other objects which will become apparent from the detailed description of the machine which follows, the root crop harvester embodying the invention as illustrated in the drawings was developed.

### SUMMARY OF THE INVENTION

The present invention relates to a pull type tractor driven root crop digger cum harvester having an improved hitch assembly and an efficient conveyor system.

The present invention provides a pull type tractor driven root crop digger cum harvester according to claim 1. Preferred embodiments are provided in the dependent claims.

### BRIEF DESCRIPTION OF THE DRAWINGS

Further objects, advantages and features of the apparatus according to the invention will be apparent to those skilled in the art from the following detailed description of a particular embodiment, given by say of a non-limiting example, with reference to the accompanying drawings, wherein:
Fig. 1 shows a perspective view of the pull type tractor driven root crop digger cum harvester according to present invention.
Fig. 2 shows a plan view of the pull type tractor driven root crop digger cum harvester according to present invention.
Fig. 3 shows a perspective view of the hitch assembly according to present invention.
Fig. 4 shows a perspective view of the pull type tractor driven root crop digger cum harvester according to present invention.
Fig. 5 shows a schematic view of the root crop conveyor system according to present invention.
Fig. 6 shows a plan detailed view of the root crop conveyor system according to present invention
Fig. 7 shows a plan detailed view of the root crop conveyor system according to present invention
Fig. 8 shows a schematic view of the unloading conveyor according to present invention.

### DETAILED DESCRIPTION OF THE INVENTIONS

Before explaining the present invention in detail, it is to be understood that the invention is not limited in its application to the details of the construction and arrangement of parts illustrated in the accompanied drawings. The invention is capable of other embodiments, as depicted in different figures as described above and of being practiced or carried out in a variety of ways. It is to be understood that the phraseology and terminology employed herein is for the purpose of description and not of limitation.

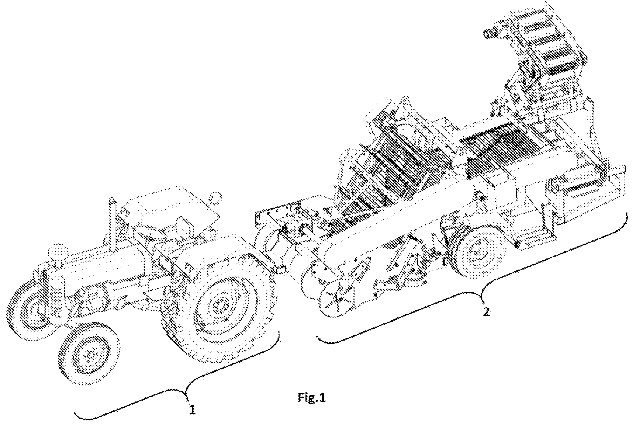

As shown in fig. 1 the present invention discloses a pull type tractor driven root crop digger cum harvester (2) which is adapted to be drivably attached with a tractor (1) for movement therewith. The harvester (2) according to present invention is equipped with bevel gearbox in front which takes power from PTO (power take-off) of tractor (1), from gear box drive is fed to various rollers and downholding devices for conveyance of root crops and soil. A PTO of the tractor (1) and the gear box input shaft of the harvester (2) connected with universal joints to provide freedom to rotate in horizontal direction.

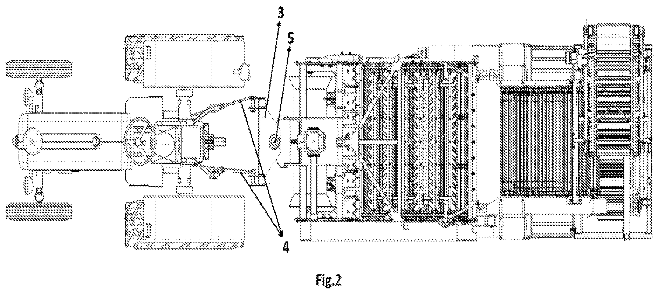

Now, as shown in Fig. 1 and 2, the root crop harvester (2) according to present invention comprises a hitch assembly (3) positioned at front side of the harvester (2) for attaching the harvester with the tractor, a harvester cum digger assembly positioned rearward to the hitch assembly (3) for uprooting the root crop from the ground and a root crop conveyer system located downstream to the harvester cum digger assembly for conveying and dumping the uprooted root crop in trolley or carriage. It is to be understood that the harvester (2) according to present invention can be connected to any kind of tow vehicle. Said harvester (2) having two rear ground engaging wheels (12) for translation of the harvester (2) on the field.

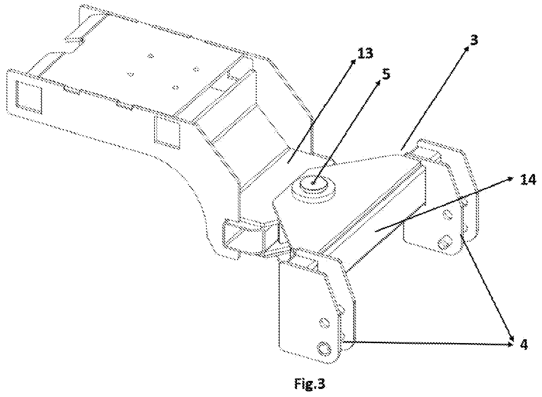

Now as shown in Fig. 2 and 3, the hitch assembly (3) is adapted to connect with the towing vehicle such as tractor (1) with two lower links (4) and also driven by PTO shaft of the towing vehicle. Now, the hitch assembly (3) comprises a fix frame (13) and a rotating frame (14) pivotally connected with the fix frame (13) through a pin-joint (5). The harvester (2) is attached with the tractor (1) through the lower links (4) which is connected with the rotating frame (14).While taking turn or travelling on road, the rotating frame (14) rotates around vertical axis formed on the pin joint (5) with respect to the fix frame (13).

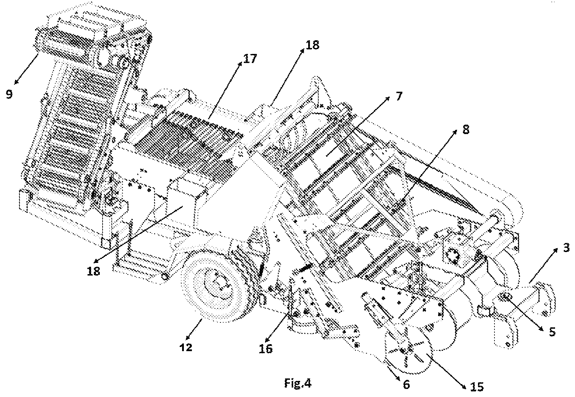

This configuration overcomes the problem of lifting of tractor (1) during turning by providing a new hitch assembly (3) which has a pivot between 3-point hitch frame and machine frame. The weight of machine is supported on ground by two wheels. This results in a trailed arrangement behind the tractor instead of mounted type. The pin-joint (5) along with wheels(12), shown in Fig. 4, allows the articulation between tractor (1) and harvester (2) resulting in smaller turning radius and not causing any front lifting of tractor.

Now as shown in Fig. 4, the harvester cum digger assembly comprises a digging blade (6) to uproot the root crop from the ground and an adjustable coulter wheel (15) being mounted ahead of the digger blade (6) for cutting the vines and loosening the soil. Said digger blade (6) is adjustable such that digging depth can be adjusted by operator through two lever arms (16) on both sides of harvester (2).

After the digging and harvesting operation, the root crop with vines and soil moves to the root crop conveyer system. Now as shown in Fig. 4, Fig. 5, Fig 6, Fig. 7 and Fig.8, said root crop conveyer system comprises an endless primary conveyor (7) located downstream to the blade (6) and that moves dirt, vines and root crops from the digger blade (6) towards the back of the harvester (2), a rubber flap mounted conveyor (8) run opposite and parallel to and on top of conveyer (7) for preventing any fall of root crop due to gravity and an unloading conveyor (9) located downstream to the primary conveyor (7). Through this way most of the soil clod will be separated on front side and rest will be separated on back side of conveyor.

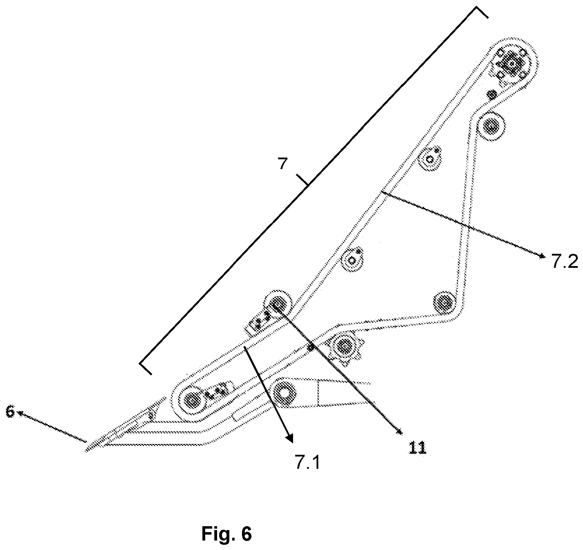

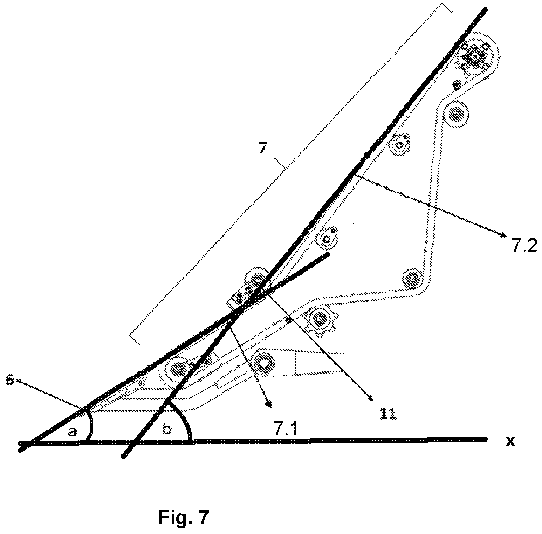

The detailed configuration of the endless conveyor (7) is shown in Fig. 6 and 7. Now as shown in Fig. 6 and 7, the endless conveyor (7) has two different parts. It exists a first part (7.1), which is the flat part and a second part (7.2) which is the steeper part formed in continuation with the first part. The first part (7.1) has an inclined angle (a) between 0 degree and 60 degree, especially between 10 degree and 50 degree and preferably between 20 degree and 40 degree with respect to a plan surface (X). The second part (7.2) has an inclined angle (b) between 25 degree and 85 degree, especially between 35 degree and 75 degree and preferably between 45 degree and 65 degree with respect to the plan surface (X).

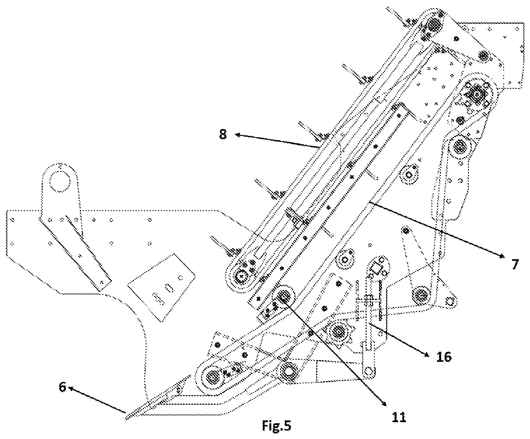

The first part (7.1) (lengthwise portion) having less inclination with compare to second part (7.2) as it is shown in the different ranges of angles. The conveyor inclination is divided into two parts for example with the help of a downholding device (11) (shown in Fig. 5, 6, 7). A downholding device can be for example a sprocket, a plan roller or any kind of downholding device. Further it is possible to use the conveyor (7) without the help of any kind of downholding device because of the own weight of the harvested root crops.

The slope of conveyer (7), especially of the first part (7.1), immediately after digging blade (6) is approximately aligned with slope of digger blade (6) with the help of a downholding device (11) reduces soil accumulation on conveyer by reducing resistance to move on later steeper portion of the slope on conveyer (7), which is the second part (7.2).

On the opposite side of conveyor (7) there is a rubber flap mounted conveyor (8). The conveyor (8) runs parallel to the second part (7.2) of the endless conveyor (7) to transport the root crops and to prevent any fall of root crop due to gravity. The inclination of the conveyor (8) is approximately identical to the inclination of conveyor 7. Through this way most of the soil clod will be separated on front side and rest will be separated on back side of conveyor.

In advantageous manner, the two conveyors (7, 8) are able to operate at different speeds. The advantage is that both the conveying capacity and the cleaning performance can be adjusted just by regulation of the speed of the two conveyors (7, 8). If the conveyor (8) runs faster than conveyor (7) the cleaning performance increases because the root crop begins to roll upwards on conveyor (7). Thereby the abrasion of the adhesions like clods or soil is increased. The different speeds allow the conveyors (7, 8) to be adapted to different harvesting situations. To realise the different speeds, conveyor (8) is driven separately. Its speed and its drive are independent of conveyor (7).

Once the root crops reach the top of conveyer (7) at the end of the second part (7.2), they are transferred to a picking table (17) (shown in Fig. 4) after passing through haulms separator rolls. Two persons stand on each side of picking table to pick the soil clods and divert them towards the ground using a chute (18) on each side of the picking table (17). After the picking table (17) the root crops get to the unloading conveyor (9). The unloading conveyor (9) takes part in the end of the machine, which is shown in Fig. 4.

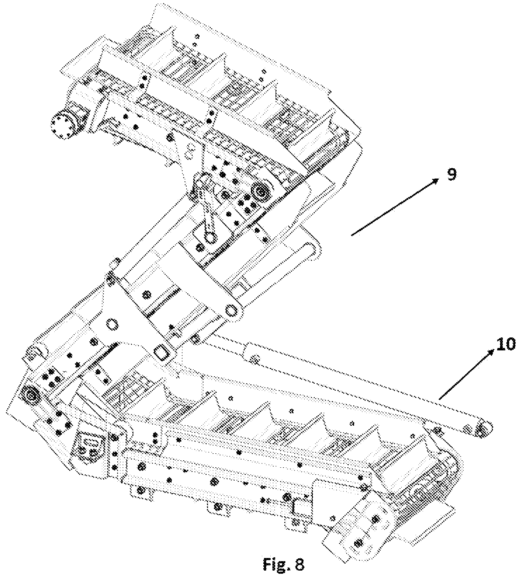

Fig. 8 shows that the unloading conveyor (9) is foldable and comprises a hydraulic cylinder (10) to adjust the height of discharge and can be folded when in transportation. The conveyer (9) is driven by hydraulic motor which gets pressurized fluid from tractor through operating valves provided on one side of harvester. The unloading conveyor (9) is used to load the root crops onto a trolley or carriage.

The embodiments described above are examples of the invention; the invention is defined by the appended claims.

### List of Reference Numerals:

Tractor (1)
Harvester (2)
Hitch Assembly (3)
Lower Links (4)
Pin Joint (5)
Digging Blade (6)
Endless Primary Conveyor (7)
Rubber Flap Mounted Conveyor (8)
Unloading Elevator Conveyor (9)
Hydraulic Cylinder (10)
Downholding device (11)
Wheels (12)
Fix Frame (13)
Rotating Frame (14)
Adjustable Coulter Wheel (15)
Two Lever Arms (16)
Picking Table (17)
Chute (18)

## Claims

1. A pull type tractor driven root crop digger cum harvester adapted to be drivably connected with a tow vehicle (1) comprises:
a hitch assembly (3) positioned at front side of the harvester (2) for attaching the harvester (2) with the tow vehicle (1),
a harvester cum digger assembly positioned rearward to the hatching assembly (3) for uprooting the root crop from the ground; and
a root crop conveyer system located downstream to the harvester cum digger assembly for conveying and dumping the uprooted root crop in a trolley or carriage;
the harvester cum digger assembly includes a digging blade (6) to uproot the root crop from the ground and an adjustable coulter wheel (15) being mounted ahead of a digger blade (6) for cutting the vines and loosening the soil;
the root crop conveyor system includes an endless primary conveyor (7) positioned downstream to the digging blade (6), a rubber flap mounted conveyor (8) runs opposite and parallel to and on top of the conveyor (7) and an unloading conveyor (9) located downstream to the primary conveyor (7) having a first part (7.1) and a second part (7.2) formed in continuation with the first part (7.2);
**characterized in that**,
the first part (7.1) has an inclined angle (a) between 0 degree and 60 degree, especially between 10 degree and 50 degree and preferably between 20 degree and 40 degree, The second part (7.2) has an inclined angle (b) between 25 degree and 85 degree, especially between 35 degree and 75 degree and preferably between 45 degree and 65 degree with respect to the plan surface (X); and
the hitch assembly (3) includes a fix frame (13) and a rotating frame (14) pivotally connected with the fix frame (13) through a pin joint (5), said rotating frame (14) having lower links (4) being connectable with the tow vehicle (1).

2. The pull type tractor driven root crop digger cum harvester as claimed in claim 1, wherein a slope of the first part (7.1) of conveyer (7), immediately after the digging blade (6) is aligned with slope of the digger blade (6).

3. The pull type tractor driven root crop digger cum harvester as claimed in claim 1 to2, wherein the first part (7.1) having less inclination compared to the second part (7.2) of the conveyor (7).

4. The pull type tractor driven root crop digger cum harvester as claimed in claim 1 to 3, wherein the rubber flap mounted conveyor (8) runs opposite and parallel to and on top of the second part (7.2) of conveyor (7) for preventing any fall of root crop due to gravity.

5. The pull type tractor driven root crop digger cum harvester as claimed in claim 1 to 4, wherein the rubber flap conveyor (8) is driven separately and independent of conveyor (7).

6. The pull type tractor driven root crop digger cum harvester as claimed in claim 1 to 5, wherein cleaning performance is adjustable by the speeds of the conveyors (7, 8).

7. The pull type tractor driven root crop digger cum harvester as claimed in claim 1 to 6, wherein the unloading conveyor (9) is foldable.

8. The pull type tractor driven root crop digger cum harvester as claimed in claim 1 to 7, wherein the unloading conveyor (9) having a hydraulic cylinder (10) to adjust the height of discharge and to fold when in transportation.

9. The pull type tractor driven root crop digger cum harvester as claimed in claim 1 to 8, wherein digging depth of the digger blade is adjustable by lever arms (16).

## Patentansprüche

1. Gezogener traktorgetriebener Wurzelgemüseroder mit Erntevorrichtung, der eingerichtet ist, um antreibbar mit einem Zugfahrzeug (1) verbunden zu werden, umfasst:
eine an der Vorderseite der Erntevorrichtung (2) angeordnete Kupplungsvorrichtung (3) zum Befestigen der Erntevorrichtung (2) an dem Zugfahrzeug (1),
eine Ernte- und Rodervorrichtung, die hinter der Kupplungsvorrichtung (3) angeordnet ist, um das Wurzelgemüse aus dem Boden zu roden; und
ein Wurzelgemüsefördersystem, das der Ernte- und Rodervorrichtung nachgeordnet angeordnet ist, um das gerodete Wurzelgemüse zu transportieren und in einen Wagen oder eine Karre abzuladen;
wobei die Ernte- und Rodervorrichtung ein Rodungsmesser (6) zum Roden des Wurzelgemüses aus dem Boden und ein verstellbares Scharrad (15) einschließt, das vor einem Rodungsmesser (6) zum Schneiden der Ranken und Auflockern des Bodens angebracht ist;
das Wurzelgemüsefördersystem ein endloses Hauptförderband (7), das dem Rodungsmesser (6) nachgeordnet angeordnet ist, ein mit Gummiklappen ausgestattetes Förderband (8), das gegenüber und parallel zu und über dem Förderband (7) verläuft, und ein Entladeförderband (9) einschließt, das dem Hauptförderband (7) nachgeordnet angeordnet ist und einen ersten Teil (7.1) und einen zweiten Teil (7.2) aufweist, der in Fortsetzung des ersten Teils (7.2) gebildet ist;
**dadurch gekennzeichnet, dass**
der erste Teil (7.1) einen Neigungswinkel (a) zwischen 0° und 60°, insbesondere zwischen 10° und 50° und vorzugsweise zwischen 20° und 40° aufweist, der zweite Teil (7.2) einen Neigungswinkel (b) zwischen 25° und 85°, insbesondere zwischen 35° und 75° und vorzugsweise zwischen 45° und 65° in Bezug auf die Planfläche (X) aufweist und
die Kupplungsvorrichtung (3) einen festen Rahmen (13) und einen drehenden Rahmen (14) einschließt, der über ein Bolzengelenk (5) schwenkbar mit dem festen Rahmen (13) verbunden ist, wobei der drehende Rahmen (14) untere Verbindungsglieder (4) aufweist, die mit dem Zugfahrzeug (1) verbunden werden können.

2. Gezogener traktorgetriebener Wurzelgemüseroder mit Erntevorrichtung nach Anspruch 1, wobei eine Neigung des ersten Teils (7.1) des Förderbands (7) unmittelbar hinter dem Rodungsmesser (6) an der Neigung des Rodungsmessers (6) ausgerichtet ist.

3. Gezogener traktorgetriebener Wurzelgemüseroder mit Erntevorrichtung nach Anspruch 1 bis 2, wobei der erste Teil (7.1) eine geringere Neigung als der zweite Teil (7.2) des Förderbandes (7) aufweist.

4. Gezogener traktorgetriebener Wurzelgemüseroder mit Erntevorrichtung nach Anspruch 1 bis 3, wobei das mit Gummiklappen ausgestattete Förderband (8) gegenüber und parallel zu und über dem zweiten Teil (7.2) des Förderbandes (7) verläuft, um ein Herabfallen von Wurzelgemüse aufgrund von Schwerkraft zu verhindern.

5. Gezogener traktorgetriebener Wurzelgemüseroder mit Erntevorrichtung nach Anspruch 1 bis 4, wobei das mit Gummiklappen ausgestattete Förderband (8) getrennt und unabhängig vom Förderband (7) angetrieben wird.

6. Gezogener traktorgetriebener Wurzelgemüseroder mit Erntevorrichtung nach Anspruch 1 bis 5, wobei die Reinigungsleistung durch die Geschwindigkeiten der Förderbänder (7, 8) einstellbar ist.

7. Gezogener traktorgetriebener Wurzelgemüseroder mit Erntevorrichtung nach Anspruch 1 bis 6, wobei das Entladeförderband (9) klappbar ist.

8. Gezogener traktorgetriebener Wurzelgemüseroder mit Erntevorrichtung nach Anspruch 1 bis 7, wobei das Entladeförderband (9) einen Hydraulikzylinder (10) zum Einstellen der Auswurfhöhe und zum Zusammenklappen während des Transports aufweist.

9. Gezogener traktorgetriebener Wurzelgemüseroder mit Erntevorrichtung nach Anspruch 1 bis 8, wobei die Grabtiefe des Rodungsmessers mittels Hebelarmen (16) einstellbar ist.

## Revendications

1. Arracheuse-récolteuse combinée de plantes racines entraînée par un tracteur de type traction, conçue pour être reliée de manière entraînée à un véhicule de remorquage (1) comprenant :
un ensemble attelage (3) positionné au niveau d'un côté avant de la récolteuse (2) permettant d'attacher la récolteuse (2) au véhicule de remorquage (1),
un ensemble récolteuse-arracheuse combiné positionné à l'arrière de l'ensemble d'attelage (3) permettant de déraciner la plante racine du sol ; et
un système convoyeur de plante racine localisé en aval de l'ensemble récolteuse-arracheuse combiné permettant de convoyer et de déverser la plante racine déracinée dans un chariot ou un attelage ;
l'ensemble récolteuse-arracheuse combiné comporte une lame d'arrachage (6) pour déraciner la plante racine du sol et un coutre à disque (15) ajustable étant monté devant une lame d'arrachage (6) permettant de couper les fanes et d'ameublir le sol ;
le système convoyeur de plante racine comporte un convoyeur primaire (7) sans fin positionné en aval de la lame d'arrachage (6), un convoyeur à rabats en caoutchouc (8) s'étend opposé et parallèle au, et au-dessus du, convoyeur (7) et un convoyeur de déchargement (9) localisé en aval du convoyeur primaire (7) ayant une première partie (7.1) et une seconde partie (7.2) formée en prolongement de la première partie (7.2) ;
**caractérisé en ce que,**
la première partie (7.1) a un angle d'inclinaison (a) entre 0 degré et 60 degrés, spécialement entre 10 degrés et 50 degrés et de préférence entre 20 degrés et 40 degrés, la seconde partie (7.2) a un angle d'inclinaison (b) entre 25 degrés et 85 degrés, spécialement entre 35 degrés et 75 degrés et de préférence entre 45 degrés et 65 degrés par rapport à la surface de plan (X) ; et
l'ensemble attelage (3) comporte un châssis fixe (13) et un châssis rotatif (14) relié de façon pivotante au châssis fixe (13) par le biais d'une articulation à pivot (5), ledit châssis rotatif (14) ayant des liaisons inférieures (4) pouvant être reliées au véhicule de remorquage (1).

2. Arracheuse-récolteuse combinée de plantes racines entraînée par un tracteur de type traction selon la revendication 1, dans laquelle une pente de la première partie (7.1) du convoyeur (7), immédiatement après la lame d'arrachage (6) est alignée avec une pente de la lame d'arrachage (6).

3. Arracheuse-récolteuse combinée de plantes racines entraînée par un tracteur de type traction selon la revendication 1 à 2, dans laquelle la première partie (7.1) a moins d'inclinaison par comparaison avec la seconde partie (7.2) du convoyeur (7).

4. Arracheuse-récolteuse combinée de plantes racines entraînée par un tracteur de type traction selon la revendication 1 à 3, dans laquelle le convoyeur à rabats en caoutchouc (8) s'étend opposé et parallèle à, et au-dessus de, la seconde partie (7.2) du convoyeur (7) pour empêcher l'une quelconque chute de plante racine en raison de la pesanteur.

5. Arracheuse-récolteuse combinée de plantes racines entraînée par un tracteur de type traction selon la revendication 1 à 4, dans laquelle le convoyeur à rabats en caoutchouc (8) est entraîné séparément et indépendamment du convoyeur (7).

6. Arracheuse-récolteuse combinée de plantes racines entraînée par un tracteur de type traction selon la revendication 1 à 5, dans laquelle une performance de nettoyage est ajustable par les vitesses des convoyeurs (7, 8).

7. Arracheuse-récolteuse combinée de plantes racines entraînée par un tracteur de type traction selon la revendication 1 à 6, dans laquelle le convoyeur de déchargement (9) est pliable.

8. Arracheuse-récolteuse combinée de plantes racines entraînée par un tracteur de type traction selon la revendication 1 à 7, dans laquelle le convoyeur de déchargement (9) a un vérin hydraulique (10) pour ajuster la hauteur de déchargement et pour se replier lors d'un transport.

9. Arracheuse-récolteuse combinée de plantes racines entraînée par un tracteur de type traction selon la revendication 1 à 8, dans laquelle la profondeur d'arrachage de la lame d'arrachage est ajustable par des bras de levier (16).
